Europäisches Patentamt

European Patent Office

Office européen des brevets

(19)

(11) Veröffentlichungsnummer: **0 324 866 B1**

# (12) EUROPÄISCHE PATENTSCHRIFT

(45) Veröffentlichungstag der Patentschrift: **16.12.92**

(21) Anmeldenummer: **88100618.3**

(22) Anmeldetag: **18.01.88**

(51) Int. Cl.⁵: **B01D 25/12**

(54) **Rotor für eine Filterpresse.**

(43) Veröffentlichungstag der Anmeldung:
**26.07.89 Patentblatt 89/30**

(45) Bekanntmachung des Hinweises auf die
Patenterteilung:
**16.12.92 Patentblatt 92/51**

(84) Benannte Vertragsstaaten:
**DE FR GB**

(56) Entgegenhaltungen:
**EP-A- 0 178 389**
**WO-A-88/00082**

(73) Patentinhaber: **BAUKO BAUKOOPERATION
GMBH
Sterneckstrasse 55
A-5020 Salzburg(AT)**

(72) Erfinder: **Kupka, Dieter
Postfach 1246
W-8853 Rain/Lech(DE)**

(74) Vertreter: **Körner, Ekkehard, Dipl.-Ing.
Patentanwalt Maximilianstrasse 58
W-8000 München 22(DE)**

## Beschreibung

Die Erfindung bezieht sich auf einen Rotor für eine Filterpresse nach dem Oberbegriff des Anspruchs 1. Ein solcher Rotor ist aus der EP-A-0 178 389 bekannt.

Diese Druckschrift beschreibt eine Kammerfilterpresse mit einem Rotor, dessen Rotorscheiben jeweils aus einer Trägerplatte und beidseitig daran befestigten elastischen Membranen bestehen, die an der Trägerplatte abgedichtet befestigt sind, wobei die zwischen den Membranen und der Trägerplatte eingeschlossenen Räume mit Strömungszuführungseinrichtungen verbunden sind, über die durch die hohl ausgeführte Welle ein Druckfluid zugeführt werden kann, um die Membranen aufzublähen und somit von der Trägerplatte in axialer Richtung wegzubewegen.

Die EP-A-0 226 659 beschreibt eine Filterpresse, bei der in einem liegenden, im wesentlichen zylindrischen Gehäuse, das von Zwei Stirnwänden und einem diese verbindenden Mantel gebildet ist, mehrere Filterplatten axial hintereinander und parallel zueinander angeordnet sind und sich zwischen jeweils zwei benachbarten Filterplatten eine Rotorscheibe befindet, die an einer allen Rotorscheiben gemeinsamen Welle befestigt ist, die in den Stirnwänden gelagert ist und die Filterplatten durchdringt. Bei dieser Filterpresse bestehen die Rotorscheiben jeweils aus einer mit der Welle drehfest verbundenen Trägerplatte und zwei zu beiden Seiten derselben axial verschiebbar angeordneten Preßplatten, die mit der Trägerplatte drehfest verbunden sind und mittels Hydraulikdruck von der Trägerplatte axial weggespreizt werden können. An den voneinander weg weisenden Seiten weisen die Preßplatten vorstehende Rippen auf, die vom mittleren Bereich gegen den Randbereich verlaufen. Während des Filterbetriebs wird die Welle gedreht, sodaß die Rippen an den Preßplatten in der Trübe, mit der die Filterpresse gefüllt ist, eine Querströmung hervorrufen, die ein vorzeitiges Zusetzen von auf den Filterplatten aufgespannten Filtertüchern verhindert. Wenn sich auf den Filtertüchern ein ausreichend dicker Filterkuchen aufgebaut hat, wird den Hydraulikeinrichtungen in den Rotorplatten Hydraulikdruck zugeführt, um die Preßplatten gegen die Filterkuchen zu drücken und diese mechanisch auszupressen, wobei die Welle stillsteht.

In der genannten EP-A-0 226 659 sind die Hydraulikeinrichtungen, die das axiale Wegspreizen der Preßplatten bewirken, Hydraulikzylinder, die an der Trägerplatte axial verschiebbar angeordnet sind und zugleich die Drehmomentübertragung von der Trägerplatte auf die Preßplatten übernehmen. In einer alternativen Ausführungsform sind die Preßplatten im Bereich ihrer Achsbohrung an der Welle oder an der Trägerplatte abgedichtet und an ihrem äußeren Umfang mit einer elastischen Faltendichtung abgedichtet, und der von ihnen eingeschlossene Hohlraum wird zum axialen Wegspreizen der Preßplatten unmittelbar mit einem hydraulischen Medium beaufschlagt. Diese Konstruktion ist wegen der Dichtungsmaßnahmen bzw. wegen der Mehrzahl von Hydraulikzylindern und der mit ihnen verbundenen Zuführungsleitungen relativ aufwendig und auch schwierig zu warten.

Die Anmelderin kennt ferner Filterpressen der eingangs genannten Art, bei denen über den Preßmembranen jeweils wenigstens ein Steg aus dem Mittenbereich der Trägerplatte zum äußeren Rand läuft, der, im unaufgeblähten Zustand der Membran, die vorerwähnte Querströmung bei Rotation der Rotorscheibe in der Filterpresse unterstützt. Diese Rippe ist mit der Trägerplatte starr verbunden, was zur Folge hat, daß sich beim Aufblähen der Membran beiderseits der Rippe taschenartige Einschnürungen ergeben, in die beim Pressen der Filterkuchen mittels der Membranen Filterkuchenanteile hineingedrückt und dort verdichtet werden. Diese Verdichtung kann zu einem intensiven Formschluß zwischen der Rippe und dem benachbarten Filterkuchen führen, der beim anschließenden Wiederanfahren des Rotors nach dem Auspressen der Filterkuchen ein erhebliches Drehmoment erfordert, um den Filterkuchen an dieser Stelle aufzubrechen. Bei einer Filterpresse mit einer Vielzahl von Filterplatten und Rotorscheiben kann dies zu ernsten Schwierigkeiten führen.

Bei Filterpressen der vorgenannten Art sind die Membranen mit Hilfe von Ringen und einer Vielzahl von Schrauben an der Trägerplatte befestigt. Ihr Austausch ist daher sehr arbeitsintensiv.

Bei Filterpressen mit Rotorscheiben, die gummielastische Membranen tragen, wird das Membranmaterial durch das Aufblähen der Membran im Laufe der Zeit bleibend verformt. Die Membran ist nicht mehr in der Lage, im drucklosen Zustand der Rotorscheibe sich völlig glattzuziehen. Die Wirkung der Rotorscheibe kann dadurch beeinträchtigt werden. Es sind auch Membranen für Filterpressen-Rotorscheiben vorgeschlagen worden, die eine spezielle Querschnittsgestalt aufweisen, die dem Zustand, den die Membran im pressenden Zustand der Rotorscheibe hat, angepaßt sind. Die Herstellung solcher Membranen erfordert jedoch erhebliche Werkzeugkosten.

Der Erfindung liegt die Aufgabe zugrunde, einen Rotor der eingangs genannten Art anzugeben, dessen Rotorscheiben in einer Filterpresse zum Bewegen der Trübe und zum mechanischen Auspressen der Filterkuchen verwendet werden können und die in einfacher Weise hergestellt werden können und keine Dichtungsprobleme aufweisen.

Diese Aufgabe wird durch die kennzeichnenden Merkmale des Anspruchs 1 gelöst. Vorteilhafte Ausgestaltungen der Erfindung sind Gegenstand der abhängigen Ansprüche.

Die Erfindung vermeidet komplizierte Dichtungseinrichtungen, wie beispielsweise eine Vielzahl von Schrauben, zur dichten Befestigung von Membranen an einer Trägerplatte oder elastische Faltendichtungen. Gemäß vorteilhafter Ausgestaltungen der Erfindung ist ein Wechsel von Rotorscheibenmembranen auf einfache Weise möglich. Besonders wichtig ist, daß Membranen verwendbar sind, die durch Ausschneiden aus Bahnmaterial hergestellt werden können. Besondere Formwerzeugkosten für die Herstellung von Membranen sind vermieden.

Die Erfindung wird nachfolgend unter Bezugnahme auf in den Zeichnungen dargestellte Ausführungsbeispiele näher erläutert. Es zeigt:

Fig. 1 als Ausschnitt einen Axialschnitt durch eine Filterpresse mit einem Rotor gemäß der Erfindung;

Fig. 2 einen Schnitt durch die Rotorscheibe nach Fig. 1 längs der Linie II-II von Fig. 1; und

Fig. 3 eine Radialschnittdarstellung durch die Filterpresse nach Fig. 1 mit Seitenansicht der Rotorscheibe;

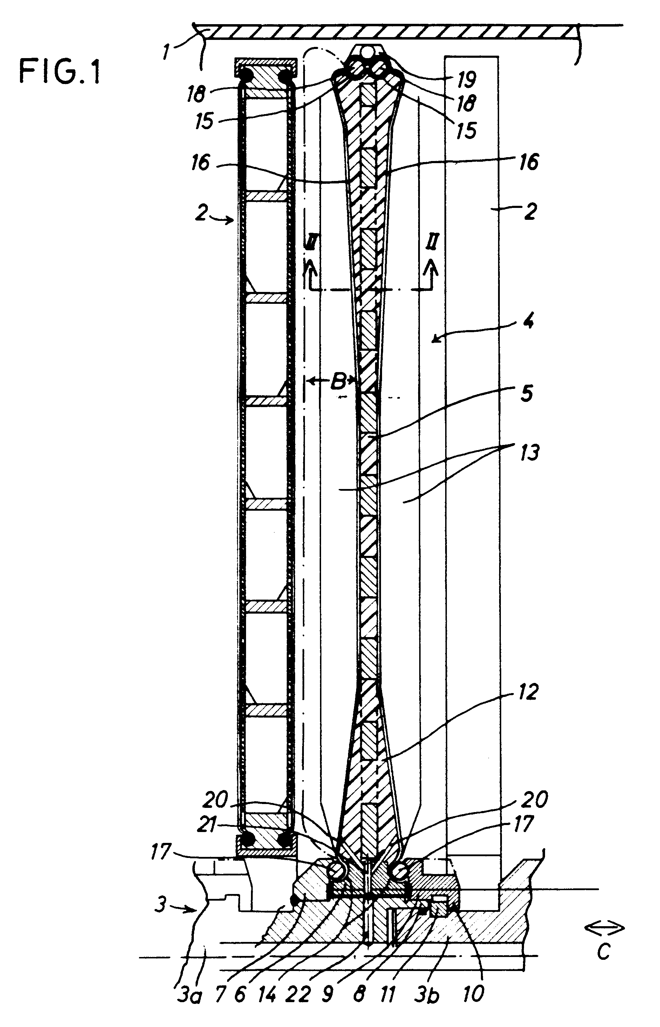

Fig. 1 zeigt im Ausschnitt einen Axialschnitt durch eine Filterpresse, wobei nur die obere Hälfte derselben dargestellt ist. Man erkennt die Mantelwand 1 eines im wesentlichen zylindrischen Gehäuses und zwei Filterplatten 2, von denen nur die links gezeigte im Schnitt detailliert dargestellt ist, und eine Rotorwelle 3, auf der zwischen den Filterplatten 2 eine Rotorscheibe 4 drehfest angebracht ist. Die Filterplatten 2 sind von der Welle 3 durchdrungen und von hier nicht gezeigten Einrichtungen in der Filterpresse drehfest gehalten. Die Filterplatten 2 weisen jeweils einen Hohlraum auf, der durch axial und radial verlaufende Stege in mehrere Kammern unterteilt sind, die strömungsmäßig miteinander verbunden sind und mit einer hier nicht dargestellten Filtratauslaßleitung verbunden sind. Auf den Stegen liegt beiderseits eine Siebplatte auf, die jeweils von einem Filtertuch überspannt ist, wobei die beiden Tücher auf der Filterplatte mittels elastischen Ringen und Rohrschellen festgespannt sind. Die Einzelheiten der Filterplatten 2 bilden nicht Gegenstand der vorliegenden Erfindung und brauchen daher nicht weiter erläutert zu werden.

Die zwischen zwei Filterplatten 2 auf der Welle 3 angeordnete Rotorscheibe 4 dient während des Filtrierbetriebes dazu, die im Raum zwischen den Filterplatten 2 befindliche Trübe in Bewegung zu halten, um ein vorzeitiges Zusetzen der auf den Filterrahmen 2 aufgespannten Filtertücher zu verhindern, weiterhin, die sich auf den Filtertüchern aufbauenden Filterkuchen zu vergleichmäßigen und glattzustreichen und, am Ende des Filtriervorgangs, bei stillstehender Welle 3, die Filterkuchen mechanisch auszupressen und anschließend unter Drehung der Welle 3 und axialer Verschiebung derselben gegenüber den Filterplatten 2, die Filterkuchen von den Filtertüchern bei geöffnetem Filtergehäuse abzuräumen.

Die Rotorscheibe 4 besteht aus einer Trägerplatte 5, die als eine gelochte Blechplatte von kreisförmigem Umriß ausgeführt ist. Die Blechplatte 5 sitzt in ihrer Mitte, d.h. in ihrem Fußbereich, auf einem ringförmigen Klemmbasiskörper 6, der auf der Welle 3 drehfest angebracht ist. Die Welle 3 besteht im vorliegenden Beispiel aus mehreren, teilweise ineinander gesteckten Teilstücken, von denen hier zwei Teilstücke 3a und 3b dargestellt sind. Ein jedes solches Teilstück trägt eine Rotorscheibe 4. Das Teilstück 3a (bzw. 3b) weist einen radial vorstehenden Flansch 7 und, in axialem Abstand dazu, einen mit einem Außengewinde versehen Gewindeabschnitt 8 auf, auf den ein mit einem Innengewinde versehener Flanschring 9 aufgeschraubt ist. Zwischen dem mit dem Wellenteilstück 3a fest verbundenen Flanschring 7 und dem mit dem Gewinde versehenen Flanschring 9 ist der Klemmbasiskörper 6 eingeklemmt. Der mit dem Gewinde versehene Flanschring 9 weist einen radial nach innnen gerichteten Kragen 10 auf, der einen an dem anderen Wellenteilstück 3b ausgebildeten oder befestigten Bund oder Ring 11 hintergreift und das in eine Vertiefung im erstgenannten Wellenteilstück 3a eingesteckte Wellenteilstück 3b am erstgenannten Wellenteilstück 3a sichert.

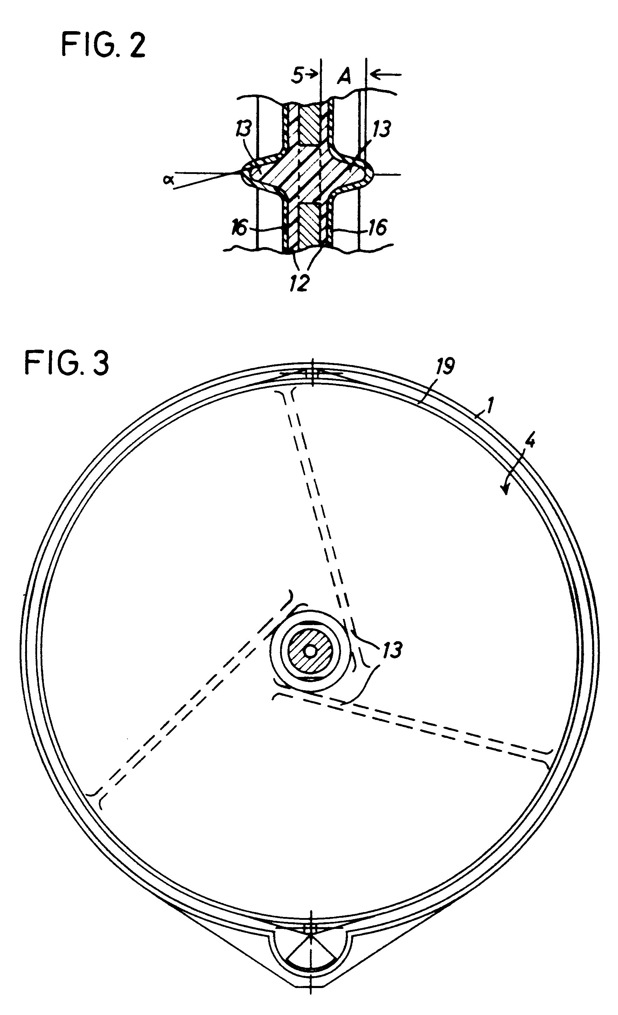

Die gelochte Blechplatte 5 ist mit einer Umkleidung 12 aus einem Kunststoffmaterial umspritzt, das die Löcher in der Blechplatte durchdringt. Diese Umkleidung 12 erstreckt sich vom Fußbereich der Blechplatte 5 bis zu ihrem äußeren Umfang und weist beiderseits der Blechplatte 5 eine etwa konkave Oberflächengestalt auf. Weiterhin ist diese Umkleidung der Blechplatte 5 im dargestellten Beispiel mit drei axial vorstehenden Rippen 13 zu beiden Seiten der Blechplatte 5 versehen, die vom Fußbereich der Blechplatte 5 bis zu ihrem Umfangsbereich verlaufen und in gleichmäßiger Verteilung auf der Rotorscheibe 4 angeordnet sind, siehe Fig. 3. Im vorliegenden Beispiel laufen diese Rippen im wesentichen radial, sie können aber auch bogenförmig oder in anderer geeigneter Weise verlaufen. Die Rippen stehen gegenüber der konkaven Oberfläche der Umkleidung 12 vor, wobei ihre Scheitel, abgesehen von den Enden der Rippen, in Radialebenen liegen.

In den Klemmbasiskörper 6 ist beidseitig je eine Ringnut 14 von etwa halbkreisförmigem Querschnitt eingeformt. In die Umfangsfläche der Umkleidung 12 sind parallel nebeneinander zwei Nuten 15 von teilkreisförmigem Querschnitt eingeformt.

Beide Seiten der Rotorscheibe 4 sind von jeweils einem gummielastischem Membrantuch 16 überspannt. Jedes Membrantuch 16 ist im Fußbereich der Blechplatte in die dort vorhandene Nut 14 eingelegt und darin mittels eines Klemm-Rundrings 17 festgeklemmt, der zwischen dem benachbarten Flanschring 7 bzw. 9 und dem Klemmbasiskörper 6 eingeklemmt ist. Am äußeren Umfangsbereich sind die Membrantücher 16 jeweils in die Umfangsnuten 15 eingelegt und darin jeweils mittels eines gummielastischen O-Rings 18 festgehalten. Um die beiden O-Ringe 18 herum erstreckt sich eine gemeinsame Rohrschelle 19, die an ihrer Innenseite eine an die O-Ringe 18 angepaßte Kontur aufweist und die auf die O-Ringe eine radial nach innen gerichtete Druckkraft ausübt, um diese auf die Membrantücher 16 zu drücken und diese in den Umfangsnuten 15 festzuklemmen.

Die Umkleidung 12 ist im Fußbereich der Blechplatte 5 von zwei Durchgangskanälen 20 durchdrungen, die sich jeweils in den von den Membrantüchern 16 überdeckten, von den konkaven Oberflächen der Umkleidung 12 begrenzten Raum öffnen. Die Durchgangskanäle stehen mit einem Kanal 21 in Verbindung, der radial im Klemmbasiskörper 6 verläuft und mit einer Radialbohrung 22 im Wellenteilstück 3a fluchtet. Die Welle 3, d.h. alle ihre Teilstücke, ist hohl und dient zugleich der Zuführung eines Druckfluides und eines Vakuums durch die Bohrung 22 und die Kanäle 21 und 20 in die Zwischenräume zwischen den Oberflächen der Umkleidung 12 und den darüber liegenden Membrantüchern 16.

Durch Zuführung eines hydraulischen oder pneumatischen Drucks in den Zwischenraum jeweils zwischen der konkaven Oberfläche der Umkleidung 12 und das elastische Membrantuch 16 kann dieses aufgebläht werden, sodaß es sich von der Umkleidung 12 entfernt und die in Fig. 1 strichpunktiert dargestellte Stellung einnimmt. Andererseits kann durch Zuführung eines Unterdrucks in den genannten Zwischenraum das Membrantuch 16 so gegen die Umkleidung 12 angezogen werden, daß es sich im wesentlichen glatt auf deren Oberfläche auflegt, was in Fig. 1 mit ausgezogenen Linien dargestellt ist. Dabei liegt das Membrantuch 16 auch auf den Rippen 13 auf, wie die Querschnittsdarstellung nach Fig. 2 zeigt. Die konkave Gestalt der Oberfläche der Auskleidung 12 zu beiden Seiten der Blechplatte 5 ist so gewählt, daß das Membrantuch auch dann glatt auf der Oberfläche der Umkleidung 12 aufliegt, wenn dieses sich im Laufe der Zeit irreversibel gedehnt haben sollte. Auf diese Weise wird eine Faltenbildung im Membrantuch 16 in diesem Betriebszustand der Filterpresse vermieden.

Die Höhe A, mit der sich die Rippen 13 über die Blechplatte 5 in axialer Richtung erheben, ist geringer, beispielsweise nur halb so groß, wie die Maximaldistanz B, um die die Membrantücher 16 durch hydraulische oder pneumatische Druckzuführung in radialer Richtung bewegt werden.

Im Betrieb der Filterpresse wird in den Raum zwischen den Rotorscheiben 4 und den Filterplatten 2 die zu filternde Trübe, vorzugsweise unter hydraulischem Druck, eingeleitet. Während des Filtervorgangs wird die Welle 3 gedreht, sodaß die Rotorscheiben 4 umlaufen. Die Filtertücher 16 sind durch Zuführung von Unterdruck in die hohle Welle 3 und somit in die Zwischenräume zwischen den Umkleidungen der Rotorscheiben 4 und den Membrantüchern 16 an die Oberflächen der Umkleidungen 12 in glatte Anlage gebracht. Sie nehmen den in Fig. 1 in durchgezogenen Linien dargestellten Zustand ein und liegen dabei auf den Rippen 13 eng auf (siehe Fig. 2). Die Rippen 13 entwickeln somit aufgrund der Rotation der Rotorscheiben 4 eine Querströmung in der Trübe, die die Trübe in Bewegung hält und ein vorzeitiges Zusetzen der Filtertücher der benachbarten Filterplatten 2 mit Filterrückstand verhindern. Wenn sich mit fortschreitendem Filtrierbetrieb aufgrund der Eindickung der Trübe auf den Filterplatten Filterkuchen aufbauen, werden diese von den Rippen 13 glattgestrichen, sodaß sich auf den Filterplatten ein gleichmäßiger Filterkuchenaufbau ergibt.

Wenn der Filterkuchen ausreichend dick und fest geworden ist, was beispielsweise aus der Stromstärke eines die Welle 3 antreibenden Elektromotors ermittelt werden kann, wird die Welle 3 angehalten und es wird durch sie hindurch ein hydraulisches Druckfluid, beispielsweise Druckwasser in die Zwischenräume zwischen den Oberflächen der Umkleidungen 12 und den Membrantüchern 16 zugeführt. Die Membrantücher 16 werden dadurch in die in Fig. 1 strichpunktiert eingezeichnete Form aufgebläht, wodurch sie die auf den benachbarten Filterplatten 2 aufgebauten Filterkuchen mechanisch pressen und damit weiter entwässern.Anschließend wird der hydraulische Druck von den Membrantüchern 16 genommen und es wird in die erwähnte Zwischenräume wieder Unterdruck eingeleitet, wodurch die Membrantücher 16 in ihre ursprüngliche, an der Auskleidung und den Rippen 13 anliegende Lage gebracht werden.

Wenn nun die Filterpresse geöffnet wird, beispielsweise durch Verschiebung des Gehäusemantels 1 in axialer Richtung gegenüber den Filterplatten und den Rotorscheiben, können die auf den Filterplatten 2 aufgebauten, ausgepreßten Filterkuchen von den Filterplatten abgeräumt werden. Dies kann in der Weise geschehen, daß die Welle 3 zusammen mit den darauf befestigten Rotorscheiben 4 in axialer Richtung nach links und rechts verschoben wird, wie in Fig. 1 durch den Pfeil C angedeutet, wobei die Welle 3 gleichzeitig gedreht wird. Die Rippen 13 mit den daraufliegenden Membrantüchern 16 treten dann zunächst mit den Filterkuchen zur einen Seite der Rotorscheiben 4 in Eingriff und schaben die Filterkuchen mechanisch von den Filtertüchern ab. Durch Verschieben der Welle 3 in die andere Richtung werden dann die Filterkuchen auf der jeweils anderen Seite der Rotorscheiben 4 von den Filtertüchern abgeschabt.

Um eine Verletzung der Filtertücher 16 auf den Rippen 13 und ein Festbacken der Rippen 13 mit den darauf befindlichen Filtertüchern 16 in den Filterkuchen zu vermeiden, sind die Rippen 13 an ihrem Scheitel zweckmäßigerweise verrundet und verlaufen ihre Seitenflächen unter einem Winkel α - (siehe Fig. 2) gegen die Senkrechte auf die Filterplatten 2, der im Bereich von beispielsweise 15° liegt.

Da sich die Membrantücher 16 abnutzen, müssen sie regelmäßig erneuert werden. Ein Austausch von Membrantüchern 16 vollzieht sich wie folgt. Bei geöffneter Filterpresse (Gehäusemantel 1 in Axialrichtung weggeschoben) wird die Welle 3 zerlegt. Zu diesem Zweck werden die schraubbaren Flanschringe 9 gelöst, sodaß im in Fig. 1 dargestellten Beispiel das Wellenteilstück 3a von den zur linken und rechten Seite benachbarten Teilstücken durch Auseinanderziehen der Welle 3 gelöst werden kann. Das Wellenteilstück 3a kann dann zusammen mit der darauf befindlichen Rotorscheibe 4 aus der Filterpresse herausgenommen werden. Sodann wird der Klemmbasiskörper 6 zusammen mit der darauf befestigten Anordnung aus Blechplatte 5, Umkleidung 12 und Membrantüchern 16 von dem Wellenteilstück 3a abgezogen. Die Klemmdruckringe 17 sind damit zugleich drucklos. Wenn man nun noch die Rohrschelle 19 löst und die O-Ringe 18 von der Rotorscheibe 4 abstreift, können die Membrantücher 16 von der Rotorscheibe 4 abgenommen werden. Der Zusammenbau erfolgt in umgekehrter Richtung.

Es ist ein besonderer Vorteil der Erfindung, daß als Membrantücher 16 solche verwendet werden können, die aus einer im wesentlichen flachen Materialbahn ausgeschnitten sind. Die Membrantücher 16 brauchen keine besondere Formgestaltung aufzuweisen, sie können jedoch ggf. eine Oberflächenstruktur haben, beispielsweise in Form von Rippen, Fischgrätmustern oder dgl., um den Glattstreicheffekt während des Filtrierbetriebs zu begünstigen. Insbesondere ist es vorteilhaft, wenn sie auf der der Umkleidung 12 zugewandten Seite eine geriffelte Oberflächenstruktur aufweisen, die beim Evakuieren des Zwischenraums zwischen der jeweiligen Membran und der Umkleidung den Abfluß von Flüssigkeit aus diesem Raum erleichtert und ein Ankleben der Membran verhindert.

**Patentansprüche**

1. Rotor für eine Filterpresse, bestehend aus einer Hohlwelle (3) und mehreren Rotorscheiben (4), die drehfest auf der Hohlwelle (3) angebracht sind und jeweils aus einer auf der Hohlwelle (3) befestigten, kreisförmigen Trägerplatte (5), zwei zu beiden Seiten der Trägerplatte (5) angebrachten dehnfähigen, druckdichten Membranen (16;), die einen Hohlraum abschließen, und Einrichtungen (20,21,22;34) zum axialen Wegbewegen der Membranen (16;30) von der Trägerplatte (5) mittels eines fluiden Druckmediums, das durch die Hohlwelle (3) hindurch in den Hohlraum zuführbar ist, **gekennzeichnet durch** folgende Merkmale:
   a) die Trägerplatte ist eine Blechplatte (5), die mit einer Vielzahl von Durchgangslöchern versehen ist und zentrisch auf einem mit einer Wellenbohrung versehenen Basiskörper (6) befestigt ist;
   b) die Blechplatte ist - unter den Membranen (16) - beiderseits mit einer Umkleidung (12) aus Kunststoff umspritzt, die die Durchgangslöcher in der Blechplatte (5) durchsetzt und die auf beiden Seiten der Blechplatte (5) eine konkave Oberfläche zwischen Basiskörper (6) und Umfang ausbildet;
   c) die Umkleidung (12) und der Basiskörper (6) sind von wenigstens zwei Strömungsdurchgängen (20) durchdrungen, die eine Strömungsverbindung zwischen den von den Membranen (16) und der umkleideten Blechplatte (5) begrenzten Räumen und einer Querbohrung (22) in der Hohlwelle (3) herstellen.

2. Rotor nach Anspruch 1, **dadurch gekennzeichnet,** daß der Basiskörper (6) zu beiden Seiten der Blechplatte (5) je eine Rille (14) zur Aufnahme je eines Klemm-Rundringes (17) aufweist und zwischen einem auf der Hohlwelle (3) fest angebrachten Flanschring (7) und einem auf die Hohlwelle (3) lösbar aufgeschraubten Flanschring (9) eingespannt ist, und daß die Membranen (16) jeweils in die Rillen (14) eingelegt und in diesen jeweils mittels eines Klemm-Rundringes (17) eingeklemmt sind, wobei die beiden Klemm-Rundringe (17) von der Seite her von den Flanschringen (7,9) mit Druck beaufschlagt sind.

3. Rotor nach Anspruch 2, **dadurch gekennzeichnet,** daß die Hohlwelle (3) aus mehreren teilweise ineinandergesteckten Teilen (3a,3b) besteht, je ein wellenfester Flanschring (7) am einen (ersten) Wellenteil (3a) befestigt ist, der lösbare Flanschring (9) einen Bund oder Ring (11) an dem benachbarten (zweiten) Wellenteil (3b) hintergreift und auf das erstgenannte Wellenteil (3a) geschraubt ist und beim Festklemmen des Basiskörpers (6) das zweite Wellenteil (3b) an dem ersten Wellenteil (3a) verspannt.

4. Rotor nach einem der vorhergehenden Ansprüche, **dadurch gekennzeichnet,** daß die umkleidete Blechplatte (5) in ihrem äußeren Umfang mit zwei zueinander parallelen Umfangsnuten (15) jeweils etwa teilkreisförmigen Querschnitts versehen ist, der äußere Randbereich einer jeden Membran (16) jeweils in eine der Umfangsnuten (15) eingelegt und in dieser durch einen zugehörigen elastischen O-Ring (18) festgehalten ist, und daß über beide O-Ringe (18) eine gemeinsame Rohrschelle (19) gespannt ist, die an ihrer Innenseite eine an die O-Ringe (18) angepaßte Kontur aufweist und die O-Ringe (18) mit den darunter liegenden Rändern der Membranen (16) in Richtung auf die Umfangsnuten (15) drückt.

5. Rotor nach einem der vorhergehenden Ansprüche, **dadurch gekennzeichnet,** daß die Umkleidung (12) der Blechplatte (5) beidseitig jeweils mit wenigstens einer sich zwischen dem Basiskörper (6) und dem äußeren Randbereich erstreckenden, axial vorstehenden Rippe (13) versehen ist, die sich gegenüber der Umkleidung (12) bis in eine Höhe (A) erstreckt, die geringer ist, als die Maximaldistanz (B), die die zugehörige Membran (16) in Bezug auf die Umkleidung (12) annehmen kann, wenn Druckmedium in den Raum hinter der Membran (16) zugeführt ist.

6. Rotor nach Anspruch 5, **dadurch gekennzeichnet,** daß die Rippe (13) schräg verlaufende Seitenflanken aufweist.

7. Rotor nach einem der vorhergehenden Ansprüche, **dadurch gekennzeichnet,** daß die Membranen (16) aus einem bahnförmigen Gummi- oder Elastomermaterial ausgeschnitten sind.

8. Rotor nach einem der vorhergehenden Ansprüche, **dadurch gekennzeichnet,** daß die Membranen (16) wenigstens auf ihrer der Umkleidung (12) zugewandten Seite eine Oberflächenstrukturierung aufweisen.

## Claims

1. Rotor for a filter press, consisting of a hollow shaft (3) and a plurality of rotor disks (4) which are fixed for co-rotation on the hollow shaft (3) therewith and each consist of a circular carrier plate (5) mounted on the hollow shaft (3), two resilient and pressure-sealed membranes (16) which are arranged at both sides of the carrier plate (5) and which seal a hollow chamber, and means (20, 21, 22; 34) for axially displacing the membranes (16; 30) from the carrier plate (5) by means of a fluid pressure medium, which can be supplied through the hollow shaft (3) to the hollow chamber, characterized by the following features:

a) the carrier plate is a sheet plate (5), which is provided with a plurality of passage holes and which is mounted concentrically on a base element (6) provided with a shaft bore;

b) the sheet plate is - below the membranes (16) - extrusion-coated on both sides by a coating (12) made of plastic material, which passes through the passage holes in the sheet plate (5) and which forms a concave surface between the base element (6) and the circumference on both sides of the sheet plate (5);

c) the coating (12) and the base element (6) are penetrated by at least two flow passages (20), which establish a flow connection between the spaces limited by the membranes (16) and the coated sheet plate (5) and a transverse bore (22) in the hollow shaft (3).

2. Rotor according to claim 1, characterized in that the base element (6) has a groove (14) at both sides of the sheet plate (15) each for receiving a clamping circular ring (17), and is clamped between a flange ring (7) fixedly arranged on the hollow shaft (3) and a flange ring (9) removably arranged on the hollow shaft (3), and in that the membranes (16) are each inserted into the grooves (14) and are clamped therein by means of a clamping circular ring (17), with the two clamping circular rings (17) being biased laterally by the flange rings (7, 9).

3. Rotor according to claim 2, characterized in that the hollow shaft (3) consists of a plurality of elements (3a, 3b) partially plugged into one another, wherein a flange ring (7) affixed at the shaft is mounted at one (first) shaft element (3a), whereas the removable flange ring (9) engages behind a collar or a ring (11) at the adjacent (second) shaft element (3b) and is threaded on the first mentioned shaft element (3a) and clamps the second shaft element (3b) to the first shaft element (3a) at clamping the base element (6).

**4.** Rotor according to one of the preceding claims, characterized in that the coated sheet plate (5) is provided at its outer circumference with two circumferrential grooves (15) parallel to each other of approximately semi-circular cross-section, in that the outer rim section of each membrane (16) is inserted into one of the circumferrential grooves (15) and is kept therein by a respective elastic O-ring (18), and in that a common pipe clamp (19), which has a contour at its inner surface adapted to the O-rings (18) is clamped over both O-rings (18), and presses the O-rings (18) with the underlying skirts of the membranes (16) in direction towards the circumferrential grooves (15).

**5.** Rotor according to one of the preceding claims, characterized in that the coating (12) of the sheet plate (5) is provided with at least one axially projecting rib (13) extending between the base body (6) and the outer skirt section, said rib extending with respect to the coating (12) up to a height (A), which is less than the maximum distance (B) which can be achieved by the respective membrane (16) in respect to the coating (12) in case pressure medium is supplied to the space behind the membrane (16).

**6.** Rotor disk according to claim 5, characterized in that the rib (13) has inclined side edges.

**7.** Rotor according to one of the preceding claims, characterized in that the membranes (16) are cut out of a web-like rubber material or elastomeric material.

**8.** Rotor according to one of the preceding claims, characterized in that the membranes (16) have a surface structuring at least on their sides facing the coating (12).

**Revendications**

**1.** Rotor pour un filtre-presse, se composant d'un arbre creux (3) et de plusieurs disques (4), qui sont fixés sur l'arbre creux (3), et respectivement d'une plaque de support (5) de forme circulaire, fixée sur l'arbre creux (3), le rotor comportant en outre deux membranes (16) étanches à la pression, extensibles, disposées des deux côtés de la plaque de support (5) et fermant une cavité, ainsi que des dispositifs (20, 21, 22 ; 34) pour écarter axialement les membranes (16 ; 30) de la plaque de support (5) au moyen d'un fluide sous pression qui peut être introduit dans la cavité à travers l'arbre creux (3), caractérisé par les particularités suivantes :

a) la plaque de support est une plaque (5) en tôle, qui est pourvue d'un grand nombre de trous traversants et qui est fixée de façon centrée sur un corps de base (6) pourvu d'un trou de passage d'arbre ;

b) la plaque de tôle est pourvue - en dessous des membranes (16) - sur les deux côtés d'un revêtement (12) en matière plastique déposée par injection, qui passe par les trous traversants de la plaque de tôle (5) et qui forme, sur les deux côtés de la plaque de tôle (5), une surface concave entre le corps de base (6) et le pourtour ;

c) le revêtement (12) et le corps de base (6) sont traversés par au moins deux passages d'écoulement (20) qui assurent une transmission d'écoulement entre les volumes délimités par la membrane (16) et la plaque de tôle (5) revêtue et un trou transversal (22) prévu dans l'arbre creux (3).

**2.** Rotor selon la revendication 1, caractérisé en ce que le corps de base (6) comporte, des deux côtés de la plaque de tôle (5), respectivement une rainure (14) pour recevoir respectivement un anneau de fixation (17) et est serré entre une bride annulaire (7) fixée sur l'arbre creux (3) et une bride annulaire (9) boulonnée de façon séparable sur l'arbre creux (3), et en ce que les membranes (16) sont chacune engagées dans les rainures (14) et sont fixées dans celles-ci respectivement au moyen d'un anneau de fixation (17), les deux anneaux de fixation (17) étant soumis latéralement à une pression par les brides annulaires (7, 9).

**3.** Rotor selon la revendication 2, caractérisé en ce que l'arbre creux (3) se compose de plusieurs parties (3a, 3b) engagées partiellement l'une dans l'autre, une bride annulaire (7) solidaire de l'arbre est fixée sur une (première) partie d'arbre (3a), la bride annulaire séparable (9) est maintenue en arrière d'un collet ou d'une bague (11) sur la partie adjacente (seconde) d'arbre (3b) et est boulonnée sur la partie d'arbre (3a) précitée et, lors de la fixation du corps de base (6), la seconde partie d'arbre (3b) est serrée sur la première partie d'arbre (3a).

**4.** Rotor selon une des revendications précédentes, caractérisé en ce que la plaque de tôle (5) revêtue est pourvue, sur son pourtour extérieur, de deux rainures périphériques (15) mutuellement parallèles et ayant chacune une forme approximativement partiellement circulaire, la zone marginale extérieure de chaque membrane (16) est engagée dans une rainure périphérique correspondante (15) et est maintenue dans celle-ci par une bague torique élastique (18) associée et en ce que, sur les deux bagues toriques (18), est serrée une bride tubulaire commune (19), qui a sur son côté intérieur un contour adapté aux bagues toriques (18) et qui comprime les bagues toriques (18), avec les bords sous-jacents des membranes (16), en direction des rainures périphériques (15).

5. Rotor selon une des revendications précédentes, caractérisé en ce que le revêtement (12) de la plaque de tôle (5) est pourvu des deux côtés respectivement d'une nervure (13) faisant saillie axialement, disposée entre le corps de base (6) et la zone marginale extérieure et s'étendant, par rapport au revêtement (12), jusqu'à une hauteur (A) qui est plus petite que la distance maximale (B) que peut occuper la membrane associée (16) par rapport au revêtement (12), lorsque du fluide sous pression est introduit dans le volume situé en arrière de la membrane (16).

6. Rotor selon la revendication 5, caractérisé en ce que la nervure (13) comporte des flancs latéraux orientés en oblique.

7. Rotor selon une des revendications précédentes, caractérisé en ce que les membranes (16) sont découpées dans une matière caoutchoutée ou élastomère en forme de bande.

8. Rotor selon une des revendications précédentes, caractérisé en ce que les membranes (16) comportent, au moins sur leur côté dirigé vers le revêtement (12), une texturation surfacique.

FIG.1

EP 0 324 866 B1

FIG. 2

FIG. 3